# EUROPÄISCHE PATENTANMELDUNG

(11) **EP 1 302 595 A1**
(43) Veröffentlichungstag der Anmeldung: **16.04.2003**
(21) Anmeldenummer: 01810981.9
(22) Anmeldetag: 09.10.2001
(51) Int. Cl.: E01F 7/04, F16F 7/12

(54) **Bremselement**

(71) Anmelder: AVT Anker + Vorspanntechnik AG, CH-1712 Tafers (CH)
(72) Erfinder: Von Allmen, Hans Peter, CH-1712 Tafers (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Zum Abbremsen bewegter Massen, insbesondere zum Schutz gegen Steinschlag und/oder Lawinen, müssen die Schutzanlagen, in der Regel Netze, mit Vorrichtungen zum Vernichten der kinetischen Energie versehen werden. Es wird eine solche Vorrichtung (1) vorgeschlagen, bei der durch ein Rohr (4) zu bremsende Zugelemente (2), z. B. Rückhalteseil oder Seile des Netzes selbst, geführt werden. Beim Aufprall einer Masse werden Zugkräfte auf das Rohrende ausgeübt, das sich zunächst verformt. Bei weiter steigender Belastung wird die Wandung des Rohrs (4) durchfurcht. Die dazu benötigte Kraft trägt über die Zeit zur Reduktion des Impulses und über den entsprechenden Bremsweg zur Absorption der kinetischen Energie der bewegten Masse bei. Dabei tritt keine signifikante Kraftspitze vor Einsetzen des Durchfurchens auf, wodurch die Gefahr eines Versagens der Schutzanlage verringert wird.

## Beschreibung

Die Erfindung bezieht sich auf Bremselemente für Vorrichtungen zur Abbremsung von bewegten Massen gemäss Oberbegriff des Anspruchs 1, insbesondere für Steinschlagund/oder Lawinenverbauungen.

Die grundsätzliche Funktionsweise von derartigen Bremselementen besteht darin, dass sie im Ereignisfall nach Überschreiten vorbestimmter Zugkräfte in den beanspruchten Seilen anspringen. Die Auffangnetze der Steinschlagund/oder Lawinenverbauungen selbst und die in ihre Tragseile sowie in die bergseitigen Rückhalte- und seitlichen Abspannseile der Stützen integrierten Bremselemente absorbieren dabei die kinetische Energie der abgefangenen Steine oder Schneemassen und bringen diese zum Stillstand.

Bisher werden Auffangnetze zum oben erwähnten Zweck mehrheitlich als Maschennetze aus gerade verlaufenden Spiral- oder Litzenseilen aus Stahldraht verwendet, wobei die maschenbildenden Seile in den Kreuzungspunkten mit Klemmen fixiert werden (z.B. EP 474 910, Kabelwerke Brugg, 1992).

Weiter sind Netze aus Drahtseilelementen bekannt, die lassoartig (CH 511 983, Industra, 1971) oder U-förmig (CH 686 789, Isofer, 1996) ineinander geschlauft werden, Netze aus einander gegenseitig durchdringenden Seilschlaufen durchgehender Seile (US 3,066,897, Richardson, 1962), wobei in den Kreuzungspunkten speziell energieabsorbierende Klemmen als Bremselemente eingesetzt sein können (US 6,027,785, Yoshida, 2000), und Netze aus sich gegenseitig durchdringenden Ringen, wobei die Ringe aus einem Einzeldraht gebildet werden, der mehrere Windungen aufweist, die unter sich verseilt sein können oder unverseilt lose aneinander liegen. Solche Netze mit sich 6-fach gegenseitig durchdringenden Ringen sind insbesondere aus der U-Boot-Abwehr im 2. Weltkrieg (FR 2 622 611, Mecanroc,1987) oder neuerdings mit sich gegenseitig 4-fach durchdringenden Ringen bekannt (EP 0 679 457, Fatzer, 1995).

Bei den Ringnetzen kann praktisch nur die Formänderungsarbeit bei der Umwandlung der Kreisringe zu Vielecken zur Energieabsorption ausgenutzt werden, während bei Netzen mit sich gegenseitig durchdringenden Schlaufen, die in den Knotenpunkten mit speziellen Klemmen fixiert sind, über Reibungskräfte Energie absorbiert werden kann. Da die Reibungskräfte nach Überwinden der Haftreibung, die in der Startphase eine Kraftspitze im Kraft-Weg Diagramm erzeugt, auf das Niveau der Gleitreibung absinken, bleibt auch hier das Vermögen, Energie zu absorbieren, beschränkt. Zudem sind die Reibungskräfte abhängig von verschiedenen schwankenden und zufallsbedingten Einflussgrössen, wie z.B. dem Spannungszustand der Klemmen, der Änderung des Gleitreibungskoeffizienten bei Erhitzung der Bremselemente im Belastungsfall etc. Dieser Mangel haftet grundsätzlich allen nach der Art einer Reibungsbremse funktionierenden Bremselementen an.

Weiter sind Bremselemente bekannt, die sowohl in die Tragseile als auch in die Rückhalte- und Abspannseile integriert werden und im Ereignisfall nach Überschreiten vorbestimmter Zugkräfte in den beanspruchten Seilen durch Zusammenziehen von Seilschlaufen vorwiegend als Reibungsbremse funktionieren (EP 494 046, Fatzer, 1992 und CH 668 300, Isofer, 1998). Neben den bereits erwähnten Problemen haftet solchen Bremselementen der Nachteil an, dass sich beim schnellen Durchfahren des Bremsweges Klemmen, Presshülsen u. dgl. erhitzen, da während der kurzen Zeit der Beanspruchung die an deren Oberflächen entstehende Wärme nicht abgeführt werden kann. Daraus kann sich insbesondere bei Steinschlagverbauungen eine Entzündungsgefahr für die Umgebung ergeben.

Weiter sind Bremselemente bekannt, die sich das Abscheren von Material (FR 2 673 253, Sisyphe, 1992) oder die plastische Verformung (DE 195 20 724, Trumer, 1996) von in der Seilachse positionierten Elementen durch die gegenläufige Bewegung der sich im Bereich dieser Elemente überlappenden Seile zunutze machen. Zur Verhinderung von Kraftspitzen in der Startphase müssen die Elemente entsprechend bearbeitet werden.

Ein ideales Bremselement wirkt dagegen mit einer in der Startphase stetig ansteigenden, über den Bremsweg konstanten Bremskraft, wodurch die zu bremsende Last eine konstante Verzögerung erfährt und dadurch auf dem kürzest möglichen Bremsweg zum Stillstand gebracht werden kann.

Der Erfindung liegt die Aufgabe zugrunde, ein Bremselement für Vorrichtungen zum Abbremsen bewegter Massen anzugeben, das mit seilförmigen Zugelementen der Vorrichtungen kombinierbar ist, um eine beim Abbremsen auftretende Zugbelastung auf die Zugelemente zu absorbieren, und das dabei einen im wesentlichen stetigen Anstieg auf eine in etwa konstante Bremskraft aufweist.

Ein solches Bremselement ist im Anspruch 1 angegeben. Die weiteren Ansprüche geben bevorzugte Ausführungsformen und Verwendungen an.

Demgemäss wird in dem Bremselement die Energie, die bei der Bremsung umgewandelt werden muss, vorwiegend durch plastische Verformungsarbeit absorbiert.
Das Bremselement ist als Einzelbremse ebenfalls in Tragseilen sowie Rückhalte- und Abspannseilen verwendbar.

Der Vorteil eines solchen Bremselementes liegt einerseits in der Doppelfunktion als Verbindungs- und Bremselement in den Knotenpunkten der maschenbildenden Seile von Auffangnetzen und andererseits in der Erzielung eines optimal kurzen Bremsweges der abgefangenen Steine oder Schneemassen dank konstanter Bremskräfte in den Trag-, Rückhalte- und Abspannseilen.

Die Anforderung, dass das Bremselement für die massenweise Verwendung in den Knotenpunkten der maschenbildenden Seile von Auffangnetzen geeignet sei, bedingt, dass es konstruktiv und bearbeitungsmässig sehr einfach sein muss, um praktisch und wirtschaftlich einsetzbar zu sein. Zudem schliessen die beschränkten Möglichkeiten der Seilführung in den Auffangnetzen die meisten bekannten Bremselemente von einer entsprechenden Verwendung aus.

Im wesentlichen erfolgt die Bremsung erfindungsgemäss dadurch, dass eine U-förmige Schlaufe eines Seiles, die durch ein rechtwinklig zu dessen Achse stehendes Rohr gesteckt wird, beim Geradeziehen bzw. Strecken direkt mit dem Querschnitt des Seiles eine Furche durch die Wandung des Rohres zieht. Durch die Anfangsstellung des Rohres mit dem Umlenkwinkel α0 = 90° zwischen Rohrwandung und Achse des Seiles wird der stetige Anstieg auf die vorgewählte konstante Bremskraft erreicht, indem sich das Rohr zuerst ovalisiert und der Umlenkwinkel α sich an der Umlenkstelle des die Rohrwandung durchfurchenden Schenkels der Schlaufe, entsprechend dem Verhältnis von Rohrdurchmesser zu Rohrlänge, allmählich einem Endwert zwischen 150° und 180° annähert.

Das Rohr könnte in seiner Längsachse auch vorgebogen werden, um den Umlenkwinkel α zu beeinflussen, insbesondere um ihn im Bereich von 120° bis 150° konstant zu halten, um das Durchfurchen der Rohrwandung zu erleichtern und das Seil an der Umlenkstelle zu schonen.

Das Rohr könnte über die ganze Länge oder an seinem Anfang und/oder Ende einen ovalen Querschnitt aufweisen, um den Verlauf der Furche zu beeinflussen. Die Wandstärke oder die Festigkeit des Rohres könnte an seinem Anfang reduziert werden, um den stetigen Anstieg auf die Bremskraft zu erleichtern. Zum selben Zweck könnte auch ein Schlitz oder eine Furche vorgesehen werden.

Das Rohr könnte zur hohen Energieabsorption aus Stahl oder einer Metalllegierung bestehen, es könnte aber auch hochfester stahlfaserarmierter Beton in Frage kommen.

Das Seil könnte ein Spiral- oder Litzenseil aus Stahldrähten sein, um grosse Bremskräfte übertragen zu können. Der die Rohrwandung durchfurchende Schenkel der Schlaufe könnte mit einem Stahlröhrchen gegen zu starke Beanspruchung an der Umlenkstelle geschützt werden.

Der Hohlraum zwischen Rohrinnenwand und der Schlaufe könnte zum Schutz des die Rohrwandung durchfurchenden Schenkels der Schlaufe ganz oder teilweise mit Zement- oder Kunststoffmörtel verfüllt werden. Dadurch könnte auch eine zusätzliche Absorption von Energie erreicht werden.

Die Verankerung der Schlaufe am Rohrende könnte mit einem durchgesteckten Bolzen oder bei der Verwendung als Bremselement in den Knotenpunkten der maschenbildenden Seile von Auffangnetzen mit einem weiteren Seil erfolgen. Es könnte auch eine an ihrem Wendepunkt offene Schlaufe mit einzeln verankerten Schenkeln verwendet werden, um so nach dem Durchfahren des Bremsweges eine Trenn- oder Sollbruchstelle zu erzeugen.

Eine Bremseinrichtung könnte aus zwei oder mehr Schlaufen und Rohren, die nebeneinander angeordnet sind, zusammengesetzt sein, um streifen- bzw. flächenartige oder räumliche Systeme zu erzeugen. In diesem Fall könnten Schlaufen von beiden Rohrenden her durchgesteckt werden und/oder die einzelnen Schlaufen könnten in verschiedenen, z.B. nebeneinander angeordneten, Rohren hin- und zurückgeführt werden.

Bevorzugte Ausführungsbeispiele der Erfindung sind nachfolgend anhand der Zeichnungen näher erläutert. Es zeigen:
- Fig. 1: einen Längsschnitt durch ein Bremselement;
- Fig. 2: den Schnitt A-A durch das Bremselement in Fig. 1;
- Fig. 3: einen Längsschnitt durch ein Bremselement in der Anfangsphase der Beanspruchung;
- Fig. 4: den Schnitt B - B durch das Bremselement in Fig. 3 mit ovalisiertem Querschnitt;
- Fig. 5: einen Längsschnitt durch ein Bremselement in der Anfangsphase der Durchfurchung der Rohrwandung mit Zunahme des Umlenkwinkels α;
- Fig. 6: den Schnitt C - C durch das Bremselement in Fig. 5 mit bereits durchfurchter Rohrwandung;
- Fig. 7: einen Längsschnitt durch ein Bremselement mit Durchfurchung des Rohres auf dem Bremsweg mit Endwert des Umlenkwinkels α;
- Fig. 8: einen Längsschnitt durch ein Bremselement am Ende des Bremsweges mit vollständig durchfurchter Rohrwandung und geradegezogener bzw. gestreckter Schlaufe;
- Fig. 9: einen Längsschnitt durch ein in seiner Längsachse vorgebogenes Rohr;
- Fig. 10: einen Längsschnitt durch ein in seiner Längsachse gerades Rohr mit verschieden langen durchfahrenen Bremswegen und den entsprechenden Umlenkwinkeln α;
- Fig. 11: einen Längsschnitt durch ein in seiner Längsachse vorgebogenes Rohr mit verschieden langen durchfahrenen Bremswegen und den entsprechenden Umlenkwinkeln α;
- Fig. 12: einen Ausschnitt aus einer Steinschlagverbauung mit einem Auffangnetz und Rückhalteseilen mit integrierten Bremselementen;
- Fig. 13: eine Sicht auf einen Ausschnitt eines Auffangnetzes mit Bremselementen in den Knotenpunkten der maschenbildenden Seile;
- Fig. 14: einen Längsschnitt durch ein Bremselement in einem Knotenpunkt der maschenbildenden Seile eines Auffangnetzes mit durch den Wendepunkt der Schlaufe gestecktem Seil;
- Fig. 15: eine Sicht auf ein streifenförmiges Bremselement mit strickleiterartiger Anordnung der Schlaufen und Rohre;
- Fig. 16: einen Längsschnitt durch zwei Rohre des Bremselementes in Fig. 15 mit nicht im selben Rohr hin- und zurückgeführten Schlaufen als Variante der Seilführung; und
- Figur 17: zeigen Längsschnitte eines modifizierten Rohres in
- bis 19: verschiedenen Stadien der Inanspruchnahme.

Eine bekannte Art der Steinschlag- und Lawinenverbauungen besteht darin, dass bergseits der zu schützenden Objekte Auffangnetze aufgespannt werden, die herunterstürzende Steine oder Schneemassen abfangen und zum Stillstand bringen. Die Auffangnetze werden in einer Ebene aufgespannt, die aus Stützen und zwischen den Stützen gespannten unteren und oberen Tragseilen gebildet wird. Die Stützen werden durch Rückhalteseile an bergseitigen Verankerungen befestigt. Die Randstützen werden mit Abspannseilen an seitlichen Verankerungen befestigt. Der Stützenfuss kann auch gelenkig mit einem Fundament verbunden werden. In die Tragseile sowie in die Rückhalte- und Abspannseile werden die Bremselemente integriert, die mit einer vorgewählten konstanten Bremskraft einen Bremsweg durchfahren und so die kinetische Energie abgefangener Steine oder Schneemassen abbauen. Die Bremskraft ist dabei auf die zulässige Tragfähigkeit der Seile bzw. der Verankerungen abgestimmt. Ein erster Energieabbau findet durch die Verformung der Auffangnetze statt. Falls diese ein grosses plastisches Verformungsvermögen aufweisen, können in dieser Phase schon beträchtliche Energien absorbiert werden. Die nachfolgend anspringenden Bremselemente in den Trag-, Rückhalte- und Abspannseilen können so entsprechend geschont werden. Die Erfindung schlägt ein Bremselement vor, das sowohl als Knotenpunkt der maschenbildenden Seile der Auffangnetze wie auch als Einzelbremse in den Tragseilen sowie in den Rückhalte- und Abspannseilen verwendet werden kann. Es weist in der Startphase einen stetigen Anstieg ohne Kraftspitze auf eine vorgewählte konstante Bremskraft auf und ermöglicht so dank konstanter Verzögerung, das Abbremsen der abgefangenen Massen auf dem kürzest möglichen Bremsweg. Die kinetische Energie wird dabei vorwiegend als plastische Verformungsarbeit absorbiert.

Bekannte Bremselemente weisen z.T. die Nachteile der Reibungsbremsen auf, die insbesondere im vorliegenden Anwendungsfall wegen des schnellen Ablaufes des Bremsvorganges stärker ins Gewicht fallen. Weiter fallen viele der bekannten Bremselemente aus konstruktiven und konzeptionellen Gründen für die Verwendung als Verbindungselement in den Knotenpunkten der maschenbildenden Seile von Auffangnetzen ausser Betracht.

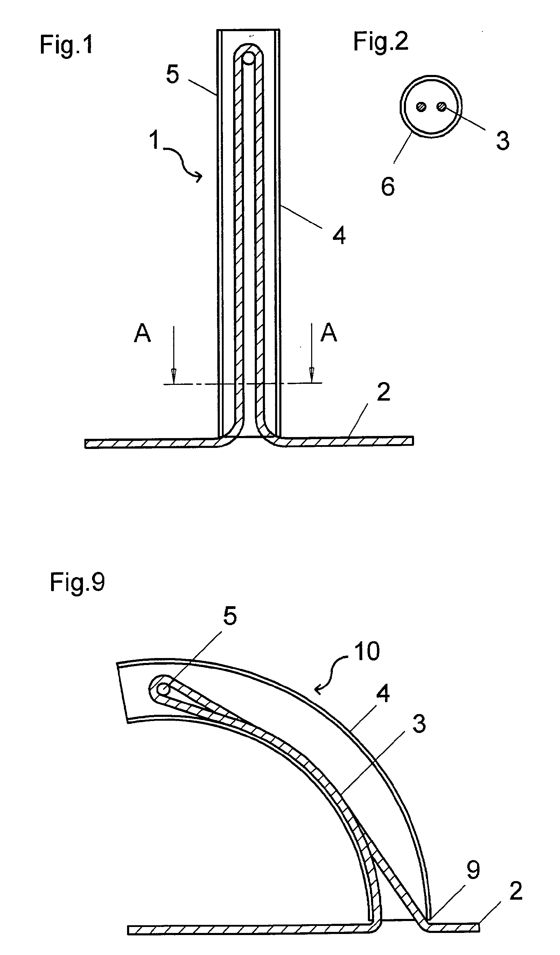

In Fig. 1 ist die Grundform des Bremselementes 1 in einem Längsschnitt dargestellt. Es besteht im wesentlichen aus einer U-förmigen Schlaufe 3 im zu bremsenden Seil 2, das zu einem anderen Systemteil, wie z. B. Auffangnetz oder Rückhalteseil, gehören kann, und einem Rohr 4. Die im Seil 2 geformte U-förmige Schlaufe 3 ist durch das rechtwinklig zur Seilachse stehende Rohr 4 gesteckt und an dessen Ende zur Verankerung im Wendepunkt der Schlaufe um einen Bolzen 5 herumgeführt.

In Fig. 2 ist ein Schnitt durch das Bremselement in Fig. 1 dargestellt, der den kreisförmigen Querschnitt 6 des Rohres 4 und die zwei Schenkel der Seilschlaufe 3 zeigt.

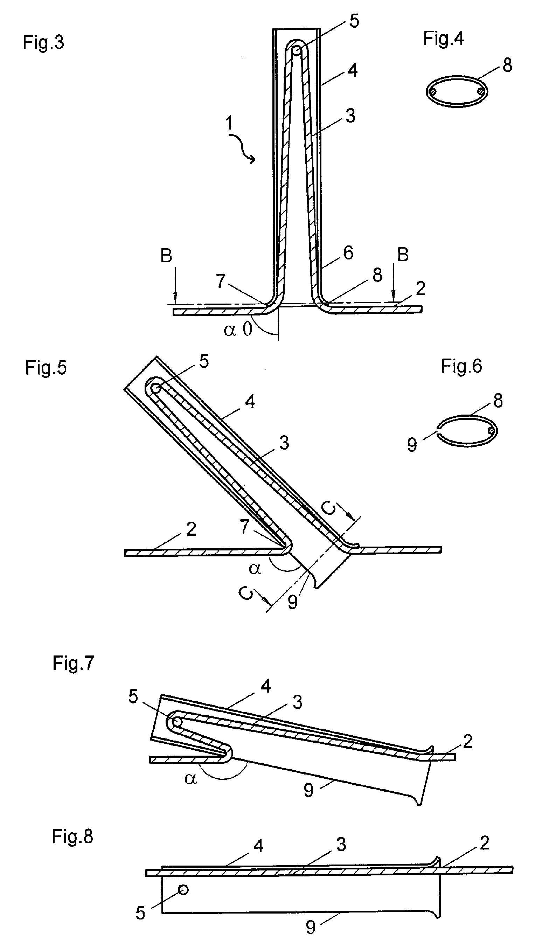

Die Wirkungsweise des Bremselementes geht schematisch aus den Figg. 3 bis 8 hervor. In Fig. 3 und Fig. 4 ist die Anfangsphase nach Einsetzen der Beanspruchung dargestellt, die zeigt, wie sich der kreisförmige Querschnitt 6 des Rohres 4 an den Umlenkstellen 7 zu einem Oval 8 verformt. Die Lage des Rohres ist nach wie vor rechtwinklig zur Seilachse, was einem Umlenkwinkel α0 = 90° zwischen Rohrwandung und Achse des Seiles entspricht.

In Figg. 5 und Fig. 6 ist die begonnene Durchfurchung der Rohrwandung durch einen Schenkel der Schlaufe dargestellt. Das Rohr 4 beginnt sich entsprechend dem Fortschreiten der Furche 9 und des in der Achse der Zugkraft bleibenden Seiles 2 zu neigen. Der Umlenkwinkel α nähert sich dabei mit abnehmender Zuwachsrate einem Endwert an, der entsprechend dem Verhältnis von Rohrdurchmesser zu Rohrlänge zwischen 150° und 180° beträgt. Mit der Ovalisierung des Querschnittes und der Zunahme des Umlenkwinkels α geht in der Startphase ein stetiger Anstieg der Bremskraft ohne Kraftspitze einher. Fig. 7 zeigt das Bremselement, wie es bei konstanter Bremskraft den Bremsweg durchfährt. In Fig. 8 ist der gesamte Bremsweg bzw. die gesamte Länge der Rohrwandung mit einer Furche 9 durchfahren und die Schlaufe 3 geradegezogen bzw. gestreckt.

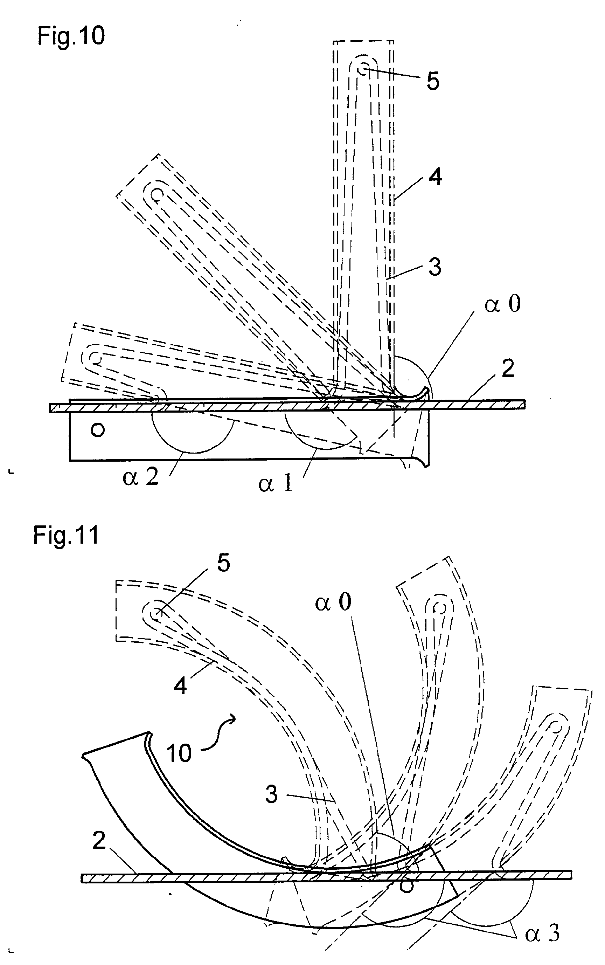

Fig. 9 zeigt ein in seiner Längsachse vorgebogenes Rohr 4, dessen Biegeform 10 so gewählt werden kann, dass der Umlenkwinkel α einen konstanten Wert im Bereich von 120° bis 150° annimmt, wodurch die Bremskraft und die Beanspruchung des Seiles an der Umlenkstelle 7 beeinflusst werden können. Entsprechend der Biegeform des Rohres und dessen sich fortlaufend ändernden Lage bezüglich der Achse des Seiles muss der nicht durchfurchende Schenkel der Schlaufe 3 ab einem gewissen Punkt daran gehindert werden, die bereits gebildete Furche 9 "im Leerlauf" zu durchfahren. Dies kann z.B. durch das Durchstecken eines Bolzens, wie er zur Verankerung der Schlaufe am Ende des Rohres verwendet wird, am Anfang des Rohres geschehen, der bewirkt, dass die Umlenkstelle des Seiles nicht an die gegenüberliegende, bereits durchfurchte Rohrwandung umschlagen kann.

Fig. 10 und Fig. 11 zeigen den Unterschied der Entwicklung des Umlenkwinkels α an der Umlenkstelle des die Rohrwandung durchfurchenden Schenkels der Schlaufe an einem geraden und einem in seiner Längsachse vorgebogenen Rohr. Beim geraden Rohr nimmt der Umlenkwinkel in der Anfangsphase rasch von α0 = 90° auf Werte von α1 > 135° zu, um sich dann mit abnehmender Zuwachsrate einem Endwert α2, entsprechend dem Verhältnis von Rohrdurchmesser zu Rohrlänge, von 150° bis 180° anzunähern. Dagegen bleibt der Umlenkwinkel beim vorgebogenen Rohr nach einer anfänglich raschen Zunahme von α0 = 90° auf den gewählten Umlenkwinkel von z.B. α3 ≅ 135° über den gesamten Bremsweg konstant.

Die Bremskraft kann über die Parameter Formgebung in der Längsachse, Querschnittsform, Durchmesser, Wandstärke und Werkstoff des Rohres beeinflusst werden. Sie kann falls erforderlich weiter abgestuft werden, indem unterschiedliche Rohre aneinandergefügt oder ineinandergestellt werden. Eine teilweise Wärmebehandlung des Rohres zur Abstufung seiner Festigkeitseigenschaften ist bei metallischen Werkstoffen auch möglich.

Für einen sanfteren Anstieg der Bremskraft in der Startphase auf die maximale Bremskraft kann die Wandstärke oder deren Festigkeit am Anfang des Rohres reduziert werden, oder es kann ein Schlitz oder eine Furche vorgegeben werden.

Für das Rohr kommen ausser kreisförmigen auch ovale, quadratische, rechteckige oder anwendungsspezifisch speziell geformte Querschnitte in Frage.

Als Werkstoffe für das Rohr kommen Stahl, der nötigenfalls durch Verzinken gegen Korrosion geschützt werden kann, oder Metalllegierungen in Frage. Daneben können für das Rohr anwendungsspezifisch auch Werkstoffe wie Kunststoffe oder hochfester, stahlfaserarmierter Beton verwendet werden.

Das Seil besteht in der Regel aus einem Spiral- oder Litzenseil aus Stahldraht, wobei besonders biegsame Ausführungen zu bevorzugen sind. Durchmesser, Festigkeit, Aufbau und Biegewilligkeit des Seiles beeinflussen die Bremskraft ebenfalls.

Die Verankerung der Schlaufe am Ende des Rohres geschieht mittels eines Bolzens oder ergibt sich bei Auffangnetzen dank des zur nächsten Maschenreihe gehörenden, durch die Schlaufe geführten Seiles von selbst. Bei Einzelbremsen kann die Verankerung der Schlaufe auch durch Umschlingen des halben Rohrumfanges durch Heraus- und Wiederhineinführen der Schlaufe durch entsprechende Bohrungen in der Rohrwandung geschehen.

Für das Seil ergibt sich an der Umlenkstelle, insbesondere bei Umlenkwinkeln α im Bereich zwischen 150° und 180°, eine hohe kombinierte Beanspruchung aus Zug-, Biege- und Querdruckkräften. Dazu kommen Beanspruchungen durch schleifenden und scheuernden Verschleiss an den Furchenrändern. Die Mindestbruchkraft des Seiles ist so zu wählen, dass die Restfestigkeit nach der Beanspruchung an der Umlenkstelle noch eine genügende Sicherheit gegen Bruch aufweist.

Der die Rohrwandung durchfurchende Schenkel der Schlaufe kann zu seiner Schonung an der Umlenkstelle mit einem Röhrchen aus Stahl, einer Metalllegierung oder Kunststoff umgeben werden. Zum selben Zweck kann auch der zwischen Schlaufe und Innenwand des Rohres verbleibende Hohlraum ganz oder teilweise mit Zement- oder Kunststoffmörtel verfüllt werden. Damit einhergehend wird zudem eine zusätzliche Absorption von Energie erreicht.

Eine vorteilhafte Variante des erfindungsgemässen Bremselementes ergibt sich, wenn die Schlaufe an ihrem Wendepunkt offen ist bzw. durchtrennt wird und die beiden Schenkel der Schlaufe einzeln verankert werden. Nach Durchfahren des gesamten Bremsweges ergibt sich in diesem Fall eine Trenn- bzw. Sollbruchstelle.

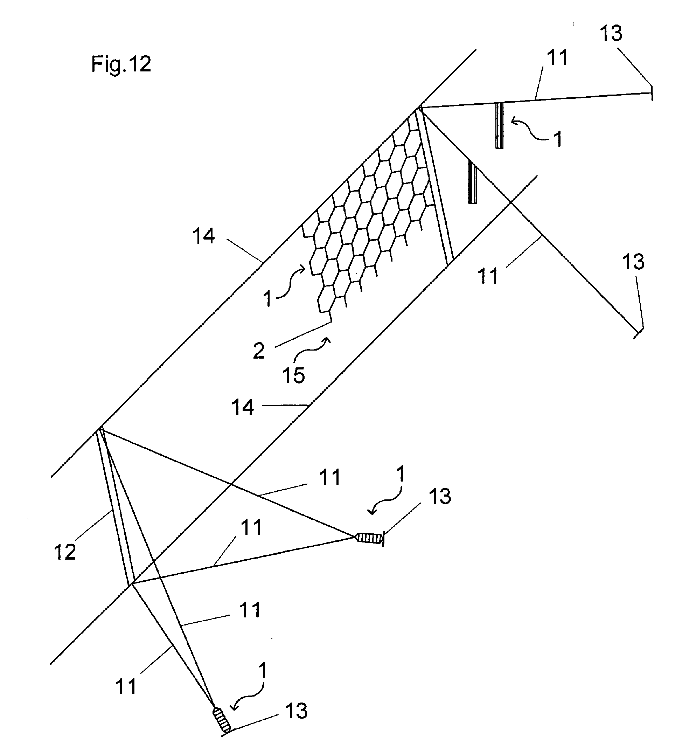

In den Figg. 12 bis 16 ist am Beispiel einer Steinschlagverbauung der Einsatz und die Wirkungsweise verschiedener Ausgestaltungen des erfindungsgemässen Bremselementes zusammenfassend erläutert.

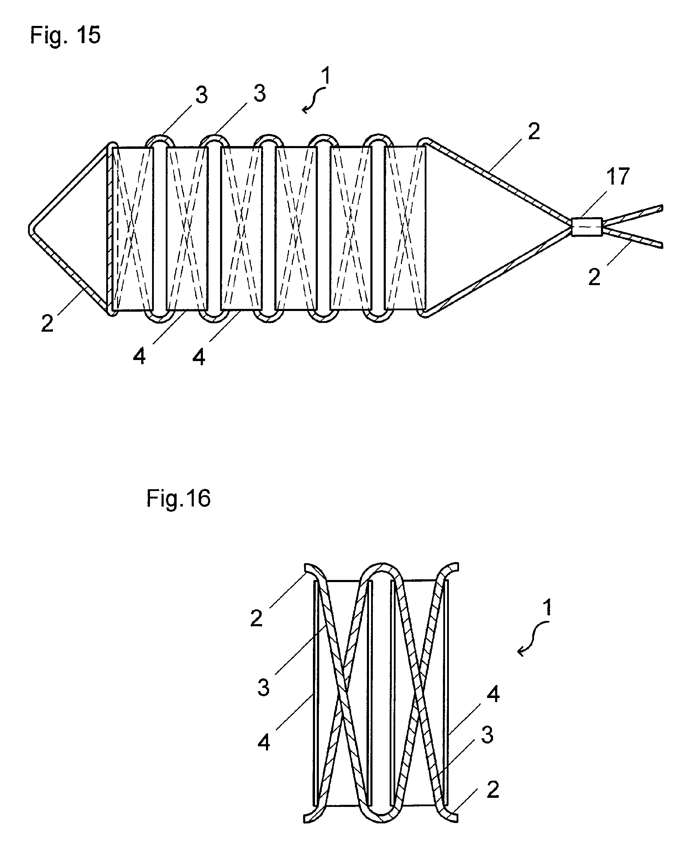

In Fig. 12 ist ein Ausschnitt aus einer Steinschlagverbauung aus der Vogelperspektive dargestellt. Rückhalteseile 11 mit integrierten Bremselementen 1 sind jeweils am Stützenkopf und Stützenfuss befestigt und bergseits an einer Verankerung 13 fixiert und halten so die Stützen 12 in ihrer Position. Zwischen den Stützen und den Tragseilen 14 sind Auffangnetze 15 aufgespannt, die in den Knotenpunkten der maschenbildenden Seile 2 mit Bremselementen 1 versehen sind. Im Ereignisfall werden zuerst Bremselemente in den Auffangnetzen beansprucht. Nach Ausschöpfung von deren Potential werden die auftretenden Kräfte die Bremselemente in den Rückhalteseilen anspringen lassen. Die Stützen werden sich entsprechend den durchfahrenen Bremswegen talwärts verschieben. Sobald die Summe der Energieaufnahme in den beanspruchten Bremselementen der kinetischen Energie des eingefallenen Steinschlages entspricht, wird dieser zum Stillstand abgebremst sein. Durch Anhängen des Stützenkopfes und Stützenfusses am selben Bremselement kann erreicht werden, dass sich das Auffangnetz auch bei einem Einschlag am oberen oder unteren Rand parallel zu seiner Aufspannebene talwärts verschiebt. Dadurch wird verhindert, dass es sich um das obere oder insbesondere um das untere Tragseil 14 dreht, wodurch sich der eingefallene Steinschlag über den Netzrand hinausdrehen könnte. Für diese Anwendung ist das in Fig. 15 und Fig. 16 beschriebene strickleiterartig aus einem einzigen Seil gebildete Bremselement besonders vorteilhaft.

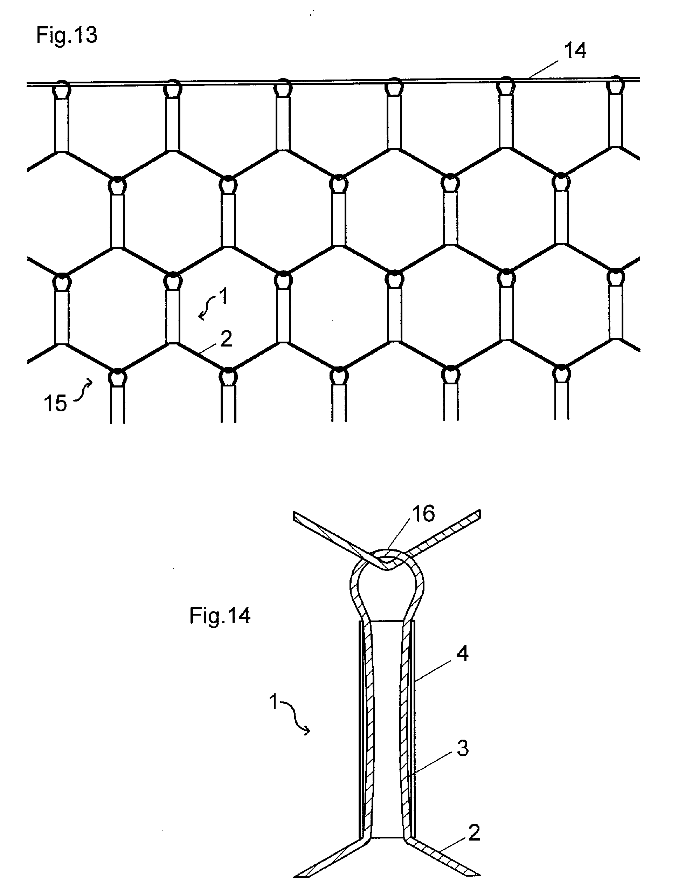

Fig. 13 zeigt einen Ausschnitt aus dem Auffangnetz 15 mit den Bremselementen 1 in den Knotenpunkten der maschenbildenden Seile 2.

In Fig. 14 ist ein entsprechender Längsschnitt durch ein solches Bremselement 1 mit durch den Wendepunkt 16 der Schlaufe 3 gestecktem Seil der nächsten Maschenreihe dargestellt.

Fig. 15 zeigt eine Sicht auf ein aus einem einzigen Seil 2 hergestelltes Bremselement 1 mit strickleiterartiger Anordnung der Schlaufen 3 und Rohre 4 und zwei abgehenden Seilenden zum Anhängen von z.B. einer Stütze oder einem oberen und unteren Tragseil. Die strickleiterartige Form wird aus einer beliebigen Anzahl von Rohren 4 als Sprossen gebildet, durch welche die U-förmigen Schlaufen 3 von beiden Enden her durchgesteckt werden. Der Abstand der Sprossen kann zur Beeinflussung des Umlenkwinkels α zwischen Null und einem beliebigen Wert variiert werden. Im ersten und letzten Rohr kann jeweils eine zusätzliche Umschlingung der Rohrwandung zur Fixierung der Seilanordnung vorgesehen werden. Die abgehenden zwei Seilenden können mit einer Klemme 17 zusammengehalten werden, um eine gleichmässige Beanspruchung des Bremselementes bei unterschiedlichem Zug auf den beiden Seilen zu erzwingen. Ein weiterer Vorteil dieses Bremselementes liegt darin, dass für die Montage ein Minimum an Verbindungselementen benötigt wird.

In Fig. 16 ist die Variante bezüglich Seilführung des strickleiterartigen Bremselementes gemäss Fig. 15 gezeigt. Die Schenkel der U-förmigen Schlaufe 3 werden hier nicht im selben Rohr 4, sondern in zwei benachbarten Rohren 4 hinund zurückgeführt.

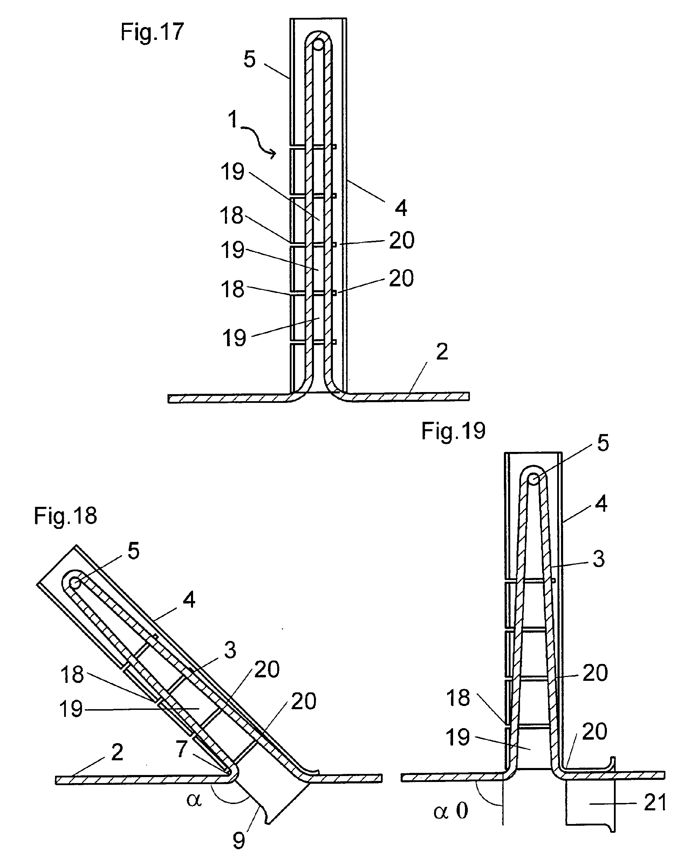

Die Figg. 17 bis 19 zeigen eine Variante des Rohres 4, die eine Begrenzung des Umlenkwinkels α bietet. Das Rohr 4 ist durch Einschnitte 18, die das Rohr 4 weitgehend durchtrennen, in Segmente 19 unterteilt. Beim Durchfurchen verhält sich jedes Segment 19 zunächst wie ein Rohr (s. Fig. 18)

Erreicht das Seil 2 jedoch einen Einschnitt 18, ist also ein Segment 21 vollständig durchfurcht, dann wird dieses Segment 21 unter dem Zug des Seils unter gelenkartigem Verbiegen des Wandrestes 20 weggeklappt (s. Fig. 19). Für das nächste Segment 19 stellen sich damit wieder die Verhältnisse ein, insbesondere bezüglich des Umlenkwinkels α, wie wenn es das erste des Rohres wäre.

Wie aus den beschriebenen Beispielen hervorgeht, ist das vorgeschlagene Bremselement geeignet, dank dem zugrunde liegenden einfachen Konzept des Durchfurchens der Rohrwandung direkt durch ein Seil, das als U-förmige Schlaufe rechtwinklig durch ein Rohr gesteckt wird, durch Variation der Formgebung, Bearbeitung oder Werkstoffwahl oder durch das Hinzufügen von weiteren Elementen, anwendungsspezifisch diverse vorteilhafte Varianten zu erzeugen.

Denkbar ist auch, dass anstelle von Seilen wenigstens im Inneren des Rohres ein Stab, gelenkig miteinander verbundene Stäbe, eine Kette, ein Band o.ä. eingesetzt wird, um die Beanspruchung des Seiles beim Durchfurchen der Rohrwandung zu vermeiden.

## Patentansprüche

1. Bremselement (1) zur Absorption kinetischer Energie in Auffangvorrichtungen (15) für bewegte Massen, insbesondere in Vorrichtungen zum Auffangen von Steinschlag und/oder Lawinen,
**dadurch gekennzeichnet,**
**dass** die Energieabsorptionssvorrichtung ein rohrförmiges Element (4) aufweist, durch das mindestens zwei Zugelemente (2) der Auffangvorrichtung verlaufen, so dass eine Zugbelastung an einem Zugelement zu einer Verformung (8) des rohrförmigen Elements an wenigstens einem ersten seiner Enden führt und bei weiter erhöhter Belastung zu einem Durchfurchen (9) der Wandung des rohrförmigen Elements durch wenigstens eines der Zugelemente führt, um eine im wesentlichen stetig auf einen vorbestimmten Wert ansteigende Gegenkraft auf die Zugelemente zu erzielen und kinetische Energie durch mechanische Verformung des rohrförmigen Elements umzuwandeln.

2. Bremselement gemäss Anspruch 1, **dadurch gekennzeichnet, dass** das rohrförmige Element (4) in seiner Längsachse gebogen, um den Umlenkwinkel (α) zwischen Rohrwandung und Achse des Zugelements (2) an der Aufreissstelle zu beeinflussen, insbesondere zu verringern, und/oder durch Quereinschnitte (18) in mindestens 2 Abschnitte (19, 21) unterteilt ist, so dass nach vollständigem Durchfurchen eines Segments (21) dieses wegklappbar und zu Beginn des Durchfurchens des nächsten Segments (19) ein geringerer Umlenkwinkel α erhältlich ist.

3. Bremselement gemäss einem der Ansprüche 1 bis 2, **dadurch gekennzeichnet, dass** das rohrförmige Element (4) über die ganze Länge oder an seinem Anfang und/oder Ende einen ovalen Querschnitt aufweist.

4. Bremselement gemäss einem der Ansprüche 1 bis 3, **dadurch gekennzeichnet, dass** das rohrförmige Element (4) wenigstens an seinem ersten Ende eine reduzierte Wandstärke oder Festigkeit der Wand zur Erleichterung des stetigen Anstieges auf die Bremskraft aufweist.

5. Bremselement gemäss einem der Ansprüche 1 bis 4, **dadurch gekennzeichnet, dass** wenigstens am ersten Ende des rohrförmigen Elements (4) zur Erleichterung des stetigen Anstieges auf die Bremskraft ein Schlitz oder eine Furche vorgeformt ist.

6. Bremselement gemäss einem der Ansprüche 1 bis 5, **dadurch gekennzeichnet, dass** das rohrförmige Element (4) aus Stahl oder einer Metalllegierung, wie z.B. einer Aluminiumlegierung, besteht.

7. Bremselement gemäss einem der Ansprüche 1 bis 6, **dadurch gekennzeichnet, dass** das rohrförmige Element (4) aus hochfestem stahlfaserverstärktem Beton besteht.

8. Bremselement gemäss einem der Ansprüche 1 bis 7, **dadurch gekennzeichnet, dass** die Zugelemente (2) Drahtseile, Stäbe, Ketten und/oder Bänder sind.

9. Bremselement gemäss einem der Ansprüche 1 bis 8, **dadurch gekennzeichnet, dass** ein Zugmittel (2) schlaufenförmig durch das rohrförmige Element (4) geführt ist, um zwei Zugelemente im rohrförmigen Element (4) auszubilden, und zur Verankerung ein Haltemittel, das sich am rohrförmigen Element abstützt, insbesondere ein Bolzen (5), oder ein weiteres Zugelement durch den Schlaufenkopf gesteckt ist.

10. Bremselement gemäss einem der Ansprüche 1 bis 9, **dadurch gekennzeichnet, dass** das die Wandung des rohrförmigen Elements durchfurchende Zugelement (2) zum Schutz gegen zu starke Beanspruchung an der Aufreissstelle mit einem Röhrchen aus Stahl oder Kunststoff geschützt ist.

11. Bremselement gemäss einem der Ansprüche 1 bis 10,
**dadurch gekennzeichnet, dass** der zwischen den Zugelementen (2) und der Innenwand des rohrförmigen Elements (4) verbleibende Hohlraum zum Schutz des die Wandung durchfurchenden Teils der Zugelemente und/oder zur zusätzlichen Absorption von Energie ganz oder teilweise mit Zement- oder Kunststoffmörtel verfüllt ist.

12. Bremselement gemäss einem der Ansprüche 1 bis 11,
**dadurch gekennzeichnet, dass** wenigstens zwei Zugelemente (2) einzeln am rohrförmigen Element (4) verankert sind, so dass nach Durchfurchen des rohrförmigen Elements durch eines der zwei Zugelemente diese voneinander gelöst sind, um eine Trenn- bzw. Sollbruchstelle zu erhalten.

13. Bremselement gemäss einem der Ansprüche 1 bis 12,
**dadurch gekennzeichnet, dass** sie aus mehreren Schlaufen von Zugmitteln (2; 11) und rohrförmigen Elementen (4), die nebeneinander angeordnet sind, zusammengesetzt ist.

14. Bremselement gemäss Anspruch 13, **dadurch gekennzeichnet, dass** die Zugmittel (2; 11) nicht im selben rohrförmigen Element (4) schlaufenartig hin- und zurückgeführt sind.

15. Bremselement gemäss einem der Ansprüche 13 bis 14,
**dadurch gekennzeichnet, dass** zwei Zugmittel (11) von einem gemeinsamen Verankerungspunkt aus gegensinnig durch mindestens ein rohrförmiges Element (4), bevorzugt eine Anordnung von mindestens 2, im wesentlichen parallel zu einander ausgerichteten rohrförmigen Elementen (4) geführt sind.

16. Verwendung des Bremselementes gemäss einem der Ansprüche 1 bis 15 als Bremselement in Rückhalte-, Abspann- und Trageseilen und/oder an Knotenpunkten in Netzen (15) zum Aufhalten bewegter Massen, insbesondere von Lawinen und/oder Steinschlag.
